# EUROPEAN PATENT APPLICATION

(11) **EP 1 865 346 A1**
(43) Date of publication of application: **12.12.2007**
(21) Application number: 06728909.0
(22) Date of filing: 10.03.2006
(51) Int. Cl.: G02B 5/30, G02F 1/1335

(54) **POLARIZER PROTECTION FILM, POLARIZING PLATE AND IMAGE DISPLAY**

(30) Priority: 31.03.2005 JP 2005104163
(71) Applicant: Nippon Shokubai Co., Ltd., Chuo-ku, Osaka-shi Osaka 541-0043 (JP); NITTO DENKO CORPORATION, Ibaraki-shi, Osaka 567-8680 (JP)
(72) Inventor: ITO, Shoji, Osaka 5640024 (JP); UEDA, Ken-ichi, Nara 6310815 (JP); ISHIBASHI, Kuniaki c/o NITTO DENKO CORPORATION, Osaka 5678680 (JP); SUGINO, Youichirou c/o NITTO DENKO CORPORATION, Osaka 5678680 (JP); TOMOGUCHI, Naoki c/o NITTO DENKO CORPORATION, Osaka 5678680 (JP); CHIBA, Tsuyoshi c/o NITTO DENKO CORPORATION, Osaka 5678680 (JP)
(74) Representative: Koepe, Gerd L.
(86) International application number: PCT/JP2006/304741
(87) International publication number: WO 2006/112207

(57) **Abstract**

Provided are: a polarizer protective film having excellent optical properties and mechanical strength, with the productivity and reworking property enhanced; a polarizing plate with less defects in an outer appearance, using a polarizer formed of the polarizer protective film and a polyvinyl alcohol-based resin; and an image display apparatus of high quality using the polarizing plate. The polarizer protective film of the present invention includes as a main component a (meth)acrylic resin, which is stretched by longitudinal stretching and/or lateral stretching.

## Description

### Technical Field

The present invention relates to a polarizer protective film, a polarizing plate using the same, and an image display apparatus such as a liquid crystal display apparatus, an organic EL display apparatus, or a PDP including at least the one polarizing plate.

### Background Art

A liquid crystal display apparatus must have polarizing plates arranged on both sides of a glass substrate forming the surface of a liquid crystal panel due to its image forming system. An example of such a polarizing plate to be used is generally manufactured by attaching a polarizer protective film formed of triacetyl cellulose or the like on each side of a polarizer made of a polyvinyl alcohol-based film and a dichromatic substance such as iodine by using a polyvinyl alcohol-based adhesive.

However, triacetyl cellulose has insufficient heat and humidity resistance and thus has a problem in that properties such as a degree of polarization and a hue of a polarizing plate degrade whenapolarizingplateusinga triacetyl cellulose film as a polarizer protective film is used under high temperature or high humidity conditions. Further, a triacetyl cellulose film causes retardation with respect to incident light in an oblique direction. With recent increase in size of a liquid crystal display, increasingly, the retardation has significant effects on viewing angle properties.

As a resin material excellent in heat resistance and optical transparency, a (meth)acrylic resin such as polymethyl methacrylate is well known (see Patent Documents 1, 2).

However, the (meth) acrylic resin is brittle and is easily cracked, which causes a problem in transportation such as breakage duringfilmtransportation,resultinginpoorproductivity. Further, there is also a problem in that a film is cracked during reworking. Therefore, it is difficult to use the (meth)acrylic resin as it is for a polarizer protective film.
Patent Document 1: JP 9-197128 A
Patent Document 2: JP 9-281333 A

### Disclosure of the Invention

### Problem to be solved by the Invention

The present invention has been made in view of the conventional problems as described above, and an obj ect of the present invention is to provide (1) a polarizer protective film having excellent optical properties and mechanical strength with enhanced productivity and reworking property, (2) a polarizing plate with less defects in an outer appearance, using the polarizer protective film and a polarizer formed of a polyvinyl alcohol-based resin, and (3) and an image display apparatus of high quality using the polarizing plate.

### Means for solving the Problems

A polarizer protective film according to the present invention includes as a main component a (meth) acrylic resin, which is stretched by longitudinal stretching and/or lateral stretching.

In the preferred embodiments, the (meth) acrylic resin has a lactone ring system.
In the preferred embodiments, the stretching is sequential stretching or simultaneous biaxial stretching at a longitudinal stretching magnification of 1.1 to 3.0 times and a lateral stretching magnification of 1.1 to 3.0 times. In the preferred embodiments, an in-plane retardation Δnd is 3.0 nm or less, a thickness direction retardation Rth is 10.0 nm or less, and a tear strength is 2. 0 N/mm or more.

According to another aspect of the present invention, a polarizing plate is provided. The polarizing plate according to the present invention includes a polarizer formed of a polyvinyl alcohol-based resin and a polarizer protective film of the present invention, in which the polarizer is bonded to the polarizer protective film via an adhesive layer. In the preferred embodiment of the present invention, the adhesive layer is formed of a polyvinyl alcohol-based adhesive. In the preferred embodiment, a polarizing plate further includes a pressure-sensitive adhesive layer as at least one of an outermost layer.

According to another aspect of the present invention, an image display apparatus is provided. The image display apparatus of the present invention includes at least one polarizing plate of the present invention.

### Effect of the Invention

The present invention can provide a polarizer protective film having excellent optical properties and mechanical strength with enhanced productivity and reworking property. The present invention can also provide a polarizing plate with less defects in an outer appearance, using the polarizer protective film and a polarizer formed of a polyvinyl alcohol-based resin. Further, the present invention can provide an image display apparatus of high quality using the polarizing plate.
A conventional polarizer protective film containing a (meth)acrylic resin as a main component is brittle and is easily cracked, which causes problems of poor transportability such as breakage during film transportation and poor productivity, and a problem in that the film is cracked during reworking. The polarizer protective film of the present invention can solve all the problems.

### Brief Description of the Drawings

[FIG. **1]** A cross-sectional view showing an example of a polarizing plate of the present invention.
[FIG. **2]** A schematic cross-sectional view of a liquid crystal display apparatus according to a preferred embodiment of the present invention.

### Description of Symbols

- **10**: liquid crystal cell
- **11,11'**: glass substrate
- **12**: liquid crystal layer
- **13**: spacer
- **20, 20'**: retardation film
- **30, 30'**: polarizing plate
- **31**: polarizer
- **32**: adhesive layer
- **33**: easily adhesion layer
- **34**: polarizer protective film
- **35**: adhesive layer
- **36**: polarizer protective film
- **40**: light guide plate
- **50**: light source
- **60**: reflector
- **100**: liquid crystal display apparatus

### Best Mode for carrying out the Invention

Hereinafter, description will be given of preferred embodiments of the present invention, but the present invention is not limited to the embodiments.

### [Polarizer protective film]

It is important that the polarizer protective film of the present invention contains a (meth)acrylic resin as a main component.

The Tg (glass transition temperature) of the above-mentioned (meth)acrylic resin, for example, is preferably 115°C or higher, more preferably 120°C or higher, still more preferably 125°C or higher, and particularly preferably 130°C or higher. By including a (meth)acrylic resin having a Tg (glass transition temperature) of 115°C or higher as a main component, for example, in a case where the (meth) acrylic resin having such a Tg is finally incorporated in a polarizing plate, the polarizing plate is likely to have excellent durability. The upper limit value of the Tg of the above-mentioned (meth) acrylic resin is not particularly limited. However, it is preferably 170°C or lower in view of a forming property and the like.

Although not particularly limited, Examples of the above-mentioned (meth)acrylic resin include a poly(meth)acrylic ester such as polymethylmethacrylate, a methyl methacrylate-(meth)acrylic acid copolymer, a methyl methacrylate-(meth)acrylic ester copolymer, a methyl methacrylate-acrylic ester-(meth)acrylic acid copolymer, a methyl (meth)acrylate-styrene copolymer (MS resin, etc.), and a polymer having an alicyclic hydrocarbon group (e.g., a methyl methacrylate-cyclohexyl methacrylate copolymer, a methyl methacrylate-norbornyl (meth)acrylate copolymer, etc.). The (meth) acrylic resin is preferably a C₁₋₆ alkyl poly (meth) acrylate such as methyl poly(meth)acrylate, and in particular, preferably methyl methacrylate-based resin containing as amain component methyl methacrylate (50 to 100% by weight, preferably 70 to 100% by weight) .

Specific examples of the above-mentioned (meth) acrylic resin include ACRYPET VH and ACRYPET VRL20A manufactured by Mitsubishi Rayon Co., Ltd. , a (meth) acrylic resin having a ring system in molecules described in JP 2004-70296 A, and a (meth) acrylic resin having high Tg obtained by intramolecular cross-linking and intramolecular cyclization.

In the present invention, inviewof highheat resistance, high transparency, and high mechanical strength, a (meth)acrylic resin having a lactone ring system is particularly preferred as the above-mentioned (meth)acrylic resin.

Examples of the (meth)acrylic resin having a lactone ring system include (meth) acrylic resins having a lactone ring system described in JP 2000-230016 A, JP 2001-151814 A, JP 2002-120326 A, JP 2002-254544 A, and JP 2005-146084 A.

The (meth)acrylic resin having a lactone ring system preferably has a lactone ring system represented by the following General Formula (1). 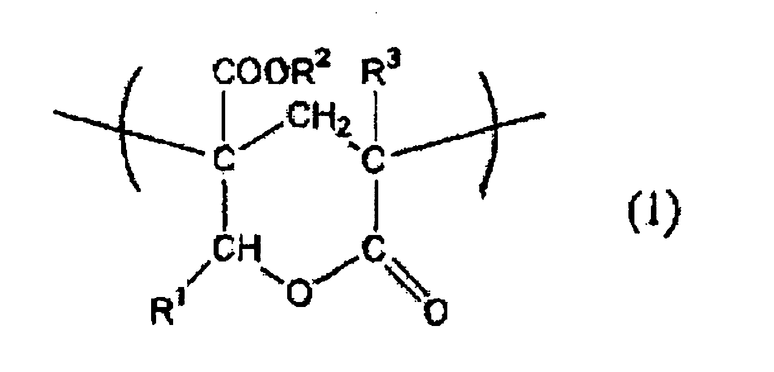 (In General Formula (1), R¹, R², and R³ independently represent hydrogen atoms or organic residues containing 1 to 20 carbon atoms. The organic residues may contain oxygen atoms.)

The content ratio of the lactone ring system represented by General Formula (1) in the structure of the (meth) acrylic resin having a lactone ring system is preferably 5 to 90% by weight, more preferably 10 to 70% by weight, still more preferably 10 to 60% by weight, and particularly preferably 10 to 50% by weight. When the content ratio of the lactone ring system represented by General Formula (1) in the structure of the (meth)acrylic resin having a lactone ring system is smaller than 5% by weight, the heat resistance, solvent resistance, and surface hardness may become insufficient. When the content ratio of the lactone ring system represented by General Formula (1) in the structure of the (meth)acrylic resin having a lactone ring system is larger than 90% by weight, the forming property may become poor.

The mass average molecular weight (which may be referred to as weight average molecular weight) of the (meth) acrylic resin having a lactone ring system is preferably 1, 000 to 2, 000, 000, more preferably5,000to1,000,000,stillmorepreferably10,000to500,000, and particularly preferably 50, 000 to 500, 000. When the mass average molecular weight is out of the above range, the effects of the present invention may not be exhibited sufficiently.

TheTg(glasstransitiontemperature)ofthe(meth)acrylic resin having a lactone ring system is preferably 115°C or higher, more preferably 125°C or higher, still more preferably 130°C or higher, particularly preferably 135°C or higher, and most preferably 140°C or higher. When the Tg is 115°C or higher, for example, in a case where the (meth)acrylic resin having such a Tg is finally incorporated in a polarizing plate, the polarizing plate is likely to have excellent durability. The upper limit value of the Tg of the(meth)acrylic resin having a lactone ring system is not particularly limited. However, it is preferably 170°C or lower in view of a forming property and the like.

Regarding the (meth) acrylic resin having a lactone ring system, the total light transmittance measured by a method pursuant to ASTM-D-1003 of amoldingobtainedby inj ectionmolding is preferably as high as possible, and is preferably 85% or higher, more preferably 88% or higher, and still more preferably 90% or higher. The total light transmittance is an index of transparency. When the total light transparency is less than 85%, the transparency decreases, which may make it impossible to use the resultant polarizing plate for the intended application.

It is preferred that the above-mentioned (meth) acrylic resin have a high light transmittance, and a low in-plane retardation And and a low thickness direction retardation Rth.

The content of the above-mentioned (meth) acrylic resin in the polarizer protective film of the present invention is preferably 50 to 99% by weight, more preferably 60 to 98% by weight, and still more preferably 70 to 97% by weight. In a case where the content of the above-mentioned (meth) acrylic resin in the polarizer protective film of the present invention is less than 50% by weight, the high heat resistance and high transparency originally owned by the (meth)acrylic resin may not be reflected sufficiently. In a case where the content of the above-mentioned (meth) acrylic resin exceeds 99% by weight, the mechanical strength may be degraded.

The polarizer protective film of the present invention contains a (meth) acrylic resin as a main component, and is stretched by longitudinal stretching and/or lateral stretching.

The above-mentioned stretching may be the one (free-end uniaxial stretching) only by longitudinal stretching or the one (fixed-enduniaxialstretching)onlybylateralstretching. However, it is preferably sequential stretching or simultaneous biaxial stretching with a longitudinal stretching magnification of 1.1 to 3.0 times and a lateral stretching magnification of 1.1 to 3.0 times. According to the stretching (free-end uniaxial stretching) only by longitudinal stretching and stretching (fixed-end uniaxial stretching) only by lateral stretching, the film strength increases in the stretching direction, and the strength does not increase in a direction perpendicular to the stretching direction, so there is a possibility that sufficient film strength cannot be obtained as the entire film. The above-mentioned longitudinal stretching magnification is more preferably 1.2 to 2.5 times, and still more preferably 1.3 to 2.0 times. The above-mentioned lateral stretching magnification is more preferably 1.2 to 2.5 times, and still more preferablyl.4to2.Otimes. In a case where the longitudinal stretching magnification and the lateral stretching magnification are less than 1.1 times, the stretching magnification is too low, so there may be substantially no effects of stretching. When the longitudinal stretching magnification and the lateral stretching magnification exceed 3.0 times, stretch breaking is likely to occur due to the problem of smoothness of a film end face.

Theabove-mentioned stretching temperature is preferably theTgto (Tg+30°C) ofafilmtobestretched. Whentheabove-mentioned stretching temperature is lower than the Tg, the film may be broken. When the above-mentioned stretching temperature exceeds (Tg + 30°C), the film may start melting, making it difficult to perform threading.

The polarizer protective film of the present invention is stretched by longitudinal stretching and/or lateral stretching, to thereby have excellent optical properties and mechanical strength, and enhanced productivity and reworking property.

It is preferred that the polarizer protective film of the present invention have an in-plane retardation Δnd of 3.0 nm or less, a thickness direction retardation Rth of 10.0 nm or less, and a tear strength of 2.0 N/mm or more. The in-plane retardation And, the thickness direction retardation Rth, and the tear strength are in those ranges, to thereby satisfy excellent optical properties and excellent mechanical strength.

In the polarizer protective film of the present invention, the in-plane retardation Δnd is preferably 2.0 nm or less, more preferably 1.5 nm or less, and still more preferably 1.0 nm or less. When the above-mentioned in-plane retardation And exceeds 3.0 nm, there is a possibility that the effects of the present invention, in particular, excellent optical properties may not be exhibited. The thickness direction retardation Rth is preferably 7.0 nm or less, more preferably 5.0 nm or less, and still more preferably 3.0 nm or less. When the above-mentioned thickness direction retardationRth exceeds 10.0 nm, the effects of the present invention, in particular, excellent optical properties may not be exhibited.

The polarizer protective film of the present invention preferably has excellent mechanical strength. The tear strength is preferably 2.1 N/mm or more, more preferably 2.2 N/mm or more, still more preferably 2.3 N/mm or more, particularly preferably 2.4 N/mm or more, and most preferably 2.5 N/mm or more. In a case where the tear strength is out of the above range, the excellent mechanical strength may not be exhibited.

In the polarizer protective film of the present invention, the moisture permeability is preferably 100 g/m²·24hr or less, and more preferably 60 g/m²·24hr or less. When the above-mentioned moisture permeability exceeds 100 g/m²·24hr, the moisture resistance may be degraded.

The haze representing optical transparency of the polarizer protective film of the present invention is preferably as low as possible, and is preferably 5% or less, more preferably 3% or less, and still more preferably 1.5% or less, and particularly preferably 1% or less. When the haze is 5% or less, a film can be visually provided with satisfactory clear feeling. When the haze is 1.5% or less, if the polarizer protective film is used as a lighting member such as a window, both visibility and lighting property are obtained, and if the polarizer protective film is used as a front plate of a display apparatus, display contents can be visually recognized satisfactorily. Thus, the polarizer protective film with such a haze has a high industrial use value.

The thickness of the polarizer protective film of the present invention is preferably 20 to 200 µm, more preferably 25 to 180 µm, still more preferably 30 to 140 µm, and particularly preferably 40 to 140 µm. When the thickness of the polarizer protective film is 20 µm or more, the polarizer protective film has appropriate strength and stiffness, and offers excellent handleability during secondary processing such as lamination and printing. Further, with such a thickness, the retardation resulting from the stress during withdrawing can be easily controlled, and thus, the film can be produced stably and easily. When the thickness of the polarizer protective film is 200 µm or less, the take-up of the film is easy, and a line speed, productivity, and controllability are improved.

The polarizer protective film of the present invention may be manufactured by any method, but it is preferred to use a method of producing the polarizer protective film by subjecting a resin composition for forming an unstretched film to extrusion (melt extrusion such as a T-die method or an inflation method), casting (melt casting, etc.), or calendaring.

In the extrusion, it is not necessary to dry and scatter a solvent in an adhesive used during processing, e.g., an organic solvent in an adhesive for dry lamination or to perform a solvent drying step, and thus the extrusion is excellent in productivity. As a specific example, there is a method of forming a film by supplying a resin composition as a material to an extruder connected to a T-die, followed by melt kneading, extrusion, water-cooling, and withdrawing. The extruder may be of a single or twin screw type, and an additive such as a plasticizer or an antioxidant may be added.

The temperature for extrusion can be set appropriately, when the glass transition temperature of a resin composition as a material is Tg(°C), (Tg + 80)°C to (Tg + 180)°C is preferred, and (Tg+100) °Cto (Tg+150) °Cismorepreferred. When the temperature for extrusion is too low, a resin may not be formed due to lack of flowability. When the temperature for extrusion is too high, the viscosity of a resin becomes low, which may cause a problem in production stability such as non-uniform thickness of a formed product.

The above-mentioned resin composition forming an unstretched film may contain, in addition to a (meth) acrylic resin as a main component, general compounding agents such as a UV absorber, a stabilizer, a lubricant, a processing aid, a plasticizer, a shock-resistant aid, a retardation reducing agent, a flatting agent, an antimicrobial agent, a fungicide, and a foaming suppressor.

In terms of the protection of a polarizer base and a liquid crystal panel, in order to provide weather resistance, the above-mentioned resin composition forming the unstretched film preferably contains a UV absorber. The melting point of the UV absorber is preferably 110°C or higher, and more preferably 120°C or higher. When the melting point of the UV absorber is 130°C or higher, the volatilization during heat-melting processing occurs less, which makes it difficult to contaminate a roll in the course of production of a film. The kind of the UV absorber is not particularly limited. However, a benzotriazole-based UV absorber with a molecular weight of 400 or more and a triazine-based UV absorber with a molecular weight of 400 or more is particularly preferred. Examples of the commercially available products include "TINWIN1577" (manufactured by Ciba Specialty Chemicals Inc.) and "Adekastab LA-31" (manufactured by ADEKA Corporation).

Regarding the optical properties of a polarizer base, the retardation in in-plane and thickness directions poses a serious problem. Therefore, it is preferred that the above-mentioned resin composition forming an unstretched film contain a retardation reducing agent. As the retardation reducing agent, for example, a styrene-containing polymer such as an acrylonitrile-styrene copolymerispreferred. The adding amount of the retardation reducing agent is preferably 30% by weight or less, more preferably 25% by weight or less, and still more preferably 20% by weight or less withrespecttothe(meth)acrylicresin. In a case where the retardation reducing agent is added in an amount exceeding this range, visible light may be scattered, and transparency may be impaired, with the result that the polarizer protective film may lack properties thereof.

The polarizer protective film of the present invention can be laminated onto another base. For example, the polarizer protective film of the present invention can also be laminated onto a base made of glass, a polyolefin resin, an ethylene-vinylidene copolymer to be a high barrier layer, polyester, or the like by multilayer extrusion or multilayer inflation including an adhesive resin layer. Ina case where thermal adhesiveness is high, anadhesion layer may be omitted.

The polarizer protective film of the present invention can be used by being laminated onto, for example, a lighting member for construction, such as a window and a carport roof member, a lighting member for a vehicle, such as a window, a lighting member for agriculture, such as a greenhouse, an illumination member, a display member such as a front filter, or the like, in addition to the application to the protection of a polarizer. Further, the polarizer protective film of the present invention can also be used by being laminated onto a package of consumer electronics, an interior member in a vehicle, a construction material for an interior, a wall paper, a decorative laminate, a hallway door, a window frame, a foot stall, and the like, which are covered with a (meth) acrylic resin film conventionally.

### [Polarizing plate]

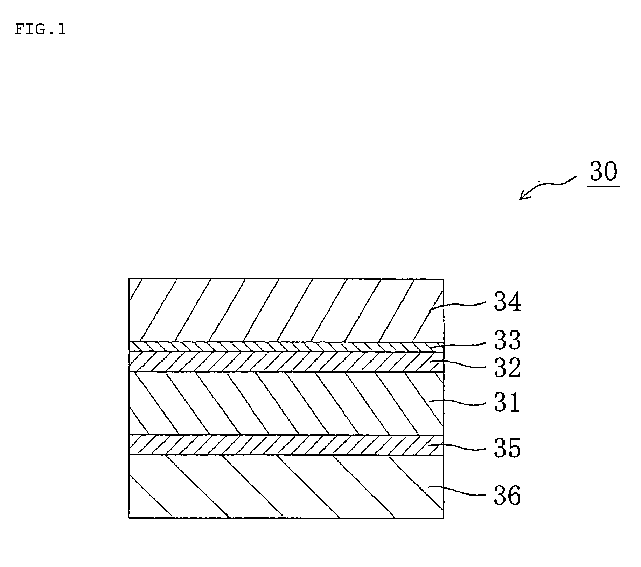

The polarizing plate of the present invention includes a polarizer formed of a polyvinyl alcohol-based resin and a polarizer protective film of the present invention, and the polarizer is bonded to the polarizer protective film via an adhesive layer. In one preferred embodiment of the polarizing plate of the present invention, as shown in FIG. 1, one surface of a polarizer 31 is bonded to a polarizer protective film 34 of the present invention via an adhesive layer 32 and an easily adhesion layer 33, and the other surface of the polarizer 31 is bonded to the polarizer protective film 36 via the adhesivelayer35. Thepolarizerprotectivefilm36maybethepolarizer protective film of the present invention, or any appropriate polarizer protective film.

The polarizer formed of a polyvinyl alcohol-based resin is generally manufactured by: coloring a polyvinyl alcohol-based resin film with a dichromatic substance (typically, iodine or a dichromatic dye); and uniaxially stretching the film. The degree of polymerization of the polyvinyl alcohol-based resin for forming the polyvinyl alcohol-based resin film is preferably 100 to 5, 000, and more preferably 1,400 to 4,000. The polyvinyl alcohol-based resin film for forming the polarizer may be formed by any appropriate method (such as a flow casting method involving film formation through flow casting of a solution containing a resin dissolved in water or an organic solvent, a casting method, or an extrusion method) . The thickness of the polarizer may be appropriately set in accordance with the purpose and application of LCD employing the polarizing plate, but is typically 5 to 80 µm.

For producing a polarizer, any appropriate method may be employed in accordance with the purpose, materials to be used, conditions, and the like. Typically, employed is a method in which the polyvinyl alcohol-based resin film is subjected to a series of production steps including swelling, coloring, cross-linking, stretching, water washing, and drying steps. In each of the treatment steps excluding the drying step, the polyvinyl alcohol-based resin film is immersed in a bath containing a solution to be used in each step. Theorder, numberof times, and absence or presence of swelling, coloring,cross-linking,stretching,water washing,and drying steps may be appropriately set in accordance with the purpose, materials to be used, conditions, and the like. For example, several treatments may be conducted at the same time in one step, or specific treatments maybeomitted. More specifically,stretchingtreatment,forexample, may be conducted after coloring treatment, before coloring treatment, or at the same time as swelling treatment, coloring treatment, and cross-linking treatment. Further, for example, cross-linking treatment can be preferably conducted before and after stretching treatment. Further, for example, water washing treatment may be conducted after each treatment or only after specific treatments.

The swelling step is typically conducted by immersing the polyvinyl alcohol-based resin film in a treatment bath (swelling bath) filled with water. This treatment allows washing away of contaminants from a surface of the polyvinyl alcohol-based resin film, washing away of an anti-blocking agent, and swelling of the polyvinyl alcohol-based resin film, to there by prevent non-uniformity such as uneven coloring. The swelling bath may appropriately contain glycerin, potassium iodide, or the like. The temperature of the swelling bath is typically about 20 to 60°C, and the immersion time in the swelling bath is typically about 0.1 to 10 minutes.

The coloring step is typically conducted by immersing the polyvinyl alcohol-based resin film in a treatment bath (coloring bath) containing a dichromatic substance such as iodine. As a solvent to be used for a solution of the coloring bath, water is generally used, but an appropriate amount of an organic solvent having compatibility with water may be added. The dichromatic substance is typically used in a ratio of 0.1 to 1. 0 part by weight with respect to 100 parts by weight of the solvent. In the case where iodine is used as a dichromatic substance, the solution of the coloring bath preferably further contains an assistant such as an iodide for improving a coloring efficiency. The assistant is used in a ratio of preferably 0.02 to 20 parts by weight, and more preferably 2 to 10 parts by weight with respect to 100 parts by weight of the solvent. Specific examples of the iodide include potassium iodide, lithium iodide, sodium iodide, zinc iodide, aluminum iodide, lead iodide, copper iodide, barium iodide, calcium iodide, tin iodide, and titanium iodide. The temperature of the coloringbath is typically about 20 to 70°C, and the immersion time in the coloring bath is typically about 1 to 20 minutes.

Thecross-linking step is typically conducted by immersing in a treatment bath (cross-linking bath) containing a cross-linking agent the polyvinyl alcohol-based resin film that has undergone the coloring treatment. The cross-linking agent employed may be any appropriate cross-linking agent. Specific examples of the cross-linking agent include: a boron compound such as boric acid or borax; glyoxal; and glutaraldehyde. The cross-linking agent may be used alone or in combination. As a solvent to be used for a solution of the cross-linking bath, water is generally used, but an appropriate amount of an organic solvent having compatibility with water may be added. The cross-linking agent is typically used in a ratio of 1 to 10 parts by weight with respect to 100 parts by weight of the solvent. In the case where a concentration of the cross-linking agent is less than 1 part by weight, sufficient optical properties are often not obtained. In the case where the concentration of the cross-linking agent is more than 10 parts by weight, stretching force to be generated on the film during stretching increases and a polarizing plate to be obtained may shrink. The solution of the cross-linking bath preferably further contains an assistant such as an iodide for obtaining uniform properties in the same plane. The concentration of the assistant is preferably 0.05 to 15 wt%, and more preferably 0.5 to 8 wt%. Specific examples of the iodide are the same as in the case of the coloring step. The temperature of the cross-linkingbath is typicallyabout 20 to 70°C, and preferably 40 to 60°C. The immersion time in the cross-linking bath is typically about 1 second to 15 minutes, and preferably 5 seconds to 10 minutes.

The stretching step may be conducted at any stage as described above. Specifically, the stretching step may be conducted after the coloring treatment, before the coloring treatment, at the same time as the swelling treatment, the coloring treatment, and the cross-linking treatment, or after the cross-linking treatment. A cumulative stretching ratio of the polyvinyl alcohol-based resin film must be 5 times or more, preferably 5 to 7 times, and more preferably 5 to 6.5 times. In the case where the cumulative stretching ratio is less than 5 times, a polarizing plate having a high degree of polarizationmaybe hard to obtain. In the case where the cumulative stretching ratio is more than 7 times, the polyvinyl alcohol-based resin film (polarizer) may easily break. A specific method of stretching employed may be any appropriate method. For example, in the case where a wet stretching method is employed, a polyvinyl alcohol-based resin film is stretched in a treatment bath (stretching bath) to a predetermined ratio. A solution of the stretching bath to be preferably used is a solution in which various metal salts or compounds of iodine, boron, or zinc are added to a solvent such as water or an organic solvent (such as ethanol).

The water washing step is typically conduced by immersing in a treatment bath (water washing bath) the polyvinyl alcohol-based resin film that has undergone the various treatments. The water washing step allows washing away of unnecessary remains from the polyvinylalcohol-basedresinfilm. Thewaterwashingbathmaycontain pure water or an aqueous solution containing iodide (such as potassium iodide or sodium iodide). The concentration of an aqueous iodide solution is preferably 0.1 to 10 % by weight. The aqueous iodide solutionmaycontainanassistant suchas zinc sulf ate or zinc chloride. The temperature of the water washing bath is preferably 10 to 60°C, and more preferably 30 to 40°C, and the immersion time is typically 1 second to 1 minute. The water washing step may be conducted only once, or may be conducted a plurality of times as required. In the case where the water washing step is conducted a plurality of times, the kind and concentration of the additive contained in the water washing bath to be used for each treatment may appropriately be adjusted. For example, the water washing step includes a step of immersing a polymer film in an aqueous potassium iodide solution (0.1 to 10% by weight, 10 to 60°C) and a step of washing the polymer film with pure water.

The drying step may employ any appropriate drying method (such as natural drying, air drying, or heat drying). For example, in heat drying, a drying temperature is typically 20 to 80°C, and a drying time is typically 1 to 10 minutes. In such a manner as described above, the polarizer is obtained.

In the polarizing plate of the present invention, the above-mentioned polarizer is bonded to the polarizer protective film of the present invention via an adhesive layer.

In the present invention, the polarizer protective film and the polarizer are bonded to each other via an adhesive layer formed of an adhesive. The adhesive layer is preferably formed of a polyvinyl alcohol-based adhesive because such an adhesive layer expresses a stronger adhesive property. The polyvinylalcohol-based adhesive contains a polyvinylalcohol-based resin and a cross-linking agent.

Examples of the above-mentionedpolyvinyl alcohol-based resin include without particular limitation: a polyvinyl alcohol obtained by saponifying polyvinyl acetate; derivatives thereof; a saponified product of a copolymer obtained by copolymerizing vinyl acetate with a monomer having copolymerizability with vinyl acetate; and a modified polyvinyl alcohol obtained by modifying polyvinyl alcohol to acetal, urethane, ether, graft polymer, phosphate, or the like. Examples of the monomer include: unsaturated carboxylic acids such as maleic acid (anhydrides), fumaric acid, crotonic acid, itaconic acid, and (meth) acrylic acid and esters thereof; α-olefin such as ethylene and propylene; (sodium) (meth) allylsulfonate; sodium sulfonate (monoalkylmalate); sodium disulfonate alkylmalate; N-methylol acrylamide; alkali salts of acrylamide alkylsulfonate; N-vinylpyrrolidone; and derivatives of N-vinylpyrrolidone. The polyvinyl alcohol-based resins may be used alone or in combination.

The polyvinyl alcohol-based resin has an average degree of polymerization of preferably 100 to 3, 000, and more preferably 500 to 3, 000, and an average degree of saponification of preferably 85 to 100 mol%, and more preferably 90 to 100 mol%.

A polyvinyl alcohol-based resin having an acetoacetyl group may be used as the above-mentioned polyvinyl alcohol-based resin. The polyvinyl alcohol-based resin having an acetoacetyl group is a polyvinyl alcohol-based adhesive having a highly reactive functional group and is preferred from the viewpoint of improving durability of a polarizing plate.

The polyvinyl alcohol-based resin having an acetoacetyl group is obtained in a reaction between the polyvinyl alcohol-based resin and diketene through a known method. Examples of the known method include: a method involving dispersing the polyvinyl alcohol-based resin in a solvent such as acetic acid, and adding diketene thereto; and a method involving dissolving the polyvinyl alcohol-basedresin in a solvent such as dimethylformamide ordioxane, in advance, and adding diketene thereto. Another example of the known method is a method involving directly bringing diketene gas or a liquid diketene into contact with polyvinyl alcohol.

A degree of acetoacetyl modification of the polyvinyl alcohol-based resin having an acetoacetyl group is not particularly limited as long as it is 0.1 mol% or more. A degree of acetoacetyl modification of less than 0.1 mol% provides insufficient water resistance with the adhesive layer and is inappropriate. The degree of acetoacetyl modification is preferably 0.1 to 40 mol%, and more preferably 1 to 20 mol%. A degree of acetoacetyl modification of more than 40 mol% decreases the number of reaction sites with a cross-linking agent and provides a small effect of improving the water resistance. The degree of acetoacetyl modification is a value measured by NMR.

As the above-mentioned cross-linking agent, the one used for a polyvinyl alcohol-based adhesive can be used without particular limitation. A compound having at least two functional groups each having reactivity with a polyvinyl alcohol-based resin can be used asthecross-linkingagent. Examplesofthecompoundinclude:alkylene diamines having an alkylene group and two amino groups such as ethylene diamine, triethylene amine, and hexamethylene dimamine (of those, hexamethylene diamine is preferred); isocyanates such as tolylene diisocyanate, hydrogenated tolylene diisocyanate, a trimethylene propane tolylene diisocyanate adduct, triphenylmethane triisocyanate, methylene bis(4-phenylmethanetriisocyanate, isophorone diisocyanate, and ketoxime blocked compounds and phenol blocked compoundsthereof;epoxiessuch asethylene glycol diglycidyl ether, polyethylene glycol diglycidyl ether, glycerin di- or triglycidyl ether, 1,6-hexane diol diglycidyl ether, trimethylol propane triglycidylether, diglycidylaniline, and diglycidyl amine; monoaldehydes such as form aldehyde, acetaldehyde, propione aldehyde, and butyl aldehyde; dialdehydes such as glyoxal, malondialdehyde, succinedialdehyde, glutardialdehyde, maleic dialdehyde, and phthaldialdehyde; an amino-formaldehyde resin such as a condensate of formaldehyde with methylol urea, methylol melamine, alkylated methylol urea, alkylated methylol melamine, acetoguanamine, or benzoguanamine; and salts of divalent or trivalent metals such as sodium, potassium, magnesium, calcium, aluminum, iron, and nickel andoxidesthereof. Amelamine-basedcross-linkingagentispreferred as the cross-linking agent, and methylolmelamine is particularly preferred.

A mixing amount of the cross-linking agent is preferably 0.1 to 35 parts by weight, and more preferably 10 to 25 parts by weight with respect to100 parts by weight of the polyvinyl alcohol-based resin. Meanwhile, for improving the durability, the cross-linking agent may be mixed within a range of more than 30 parts by weight and 46 parts by weight or less with respect to 100 parts by weight of the polyvinyl alcohol-based resin. In particular, in the case where the polyvinyl alcohol-based resin having an acetoacetyl group is used, the cross-linking agent is preferably used in an amount of more than 30 parts by weight. The cross-linking agent is mixed within a range of more than 30 parts by weight and 46 parts by weight or less, to thereby improve the water resistance.

The above-mentioned polyvinyl alcohol-based adhesive can also contain a coupling agent such as a silane coupling agent or a titanium coupling agent, various kinds of tackifiers, a UV absorber, an antioxidant, a stabilizer such as a heat-resistant stabilizer or a hydrolysis-resistant stabilizer.

In the polarizer protective film of the present invention, the surface which comes into contact with a polarizer can be subj ected to easy adhesion processing for the purpose of enhancing the adhesive property. Examples of the easy adhesion processing include surface treatment such as corona treatment, plasma treatment, low-pressure UV treatment, and saponification, and the formation of an anchor layer. They may be used together. Of those, the corona treatment, the formation of an anchor layer, and a combination thereof are preferred.

As the above-mentioned anchor layer, for example, there is a silicone layer having a reactive functional group. Examples of a material for the silicone layer having a reactive functional group are not particularly limited but include alkoxysilanols containing an isocyanate group, alkoxysilanols containing an amino group, alkoxysilnaols containing a mercapto group, alkoxysilanols containing carboxyl group, alkoxysilanols containing an epoxy group, alkoxysilanols containing a vinyl-type unsaturated group, alkoxysilanols containing a halogen group, and alkoxysilanols containing an isocyanate group, and amino-based silanol is preferred. Further, by adding a titanium-based catalyst or a tin-based catalyst for allowing the above-mentioned silanol to be reacted efficiently, the adhesive strength can be enhanced. Other additives may be added to the above-mentioned silicone containing a reactive functional group. Specifically, further, a tackifier such as a terpene resin, a phenol resin, a terpene-phenol resin, a rosin resin, or a xylene resin, a UV absorber, an antioxidant, a stabilizer such as a heat-resistant stabilizer may be used.

The above-mentioned silicone layer having a reactive functional group is formed by coating and drying by a known technology. The thickness of the silicone layer after drying is preferably 1 to 100 nm and more preferably 10 to 50 nm. During coating, silicone having a reactive functional group may be diluted with a solvent. An example of a dilution solvent is not particularly limited but includes alcohols. The dilution concentration is not particularly limited but is preferably 1 to 5% by weight, and more preferably 1 to 3% by weight.

The above-mentioned adhesive layer is formed by applying the above-mentioned adhesive on either side or both sides of a polarizer protective film, and on either side or both sides of a polarizer. After the polarizer protective film and the polarizer are attached to each other, a drying step is performed, to thereby form an adhesive layer made of an applied dry layer. After the adhesive layer is formed, the polarizer and the polarizer protective film may also be attached to each other. The polarizer and the polarizer protective film are attached to each other with a roll laminator or the like. The heat-drying temperature and the drying time are appropriately determined depending upon the kind of an adhesive.

Too large thickness of the adhesive layer after drying is not preferred in view of the adhesive property of the polarizer protective film. Therefore, the thickness of the adhesive layer is preferably 0.01 to 10 µm, and more preferably 0.03 to 5 µm.

The attachment of the polarizer protective film to the polarizer can be performed by bonding one side of the polarizer protective film on both sides of the polarizer.

Further, the attachment of the polarizer protective film to the polarizer can be performed by bonding one side of the polarizer protective film to one surface of the polarizer and attaching a cellulose-based resin to the other surface of the polarizer.

The cellulose-based resin is not particularly limited. However, triacetyl cellulose is preferred in terms of transparency and an adhesive property. The thickness of the cellulose-based resin is preferably 30 to 100 µm, and more preferably 40 to 80 µm. When the thickness is smaller than 30 µm, the film strength decreases to degrade workability, and when the thickness is larger than 100 µm, the light transmittance decreases remarkably in terms of durability.

The polarizing plate according to the present invention may have a pressure-sensitive adhesive layer as at least one of an outermost layer (such a polarizing plate may be referred to as polarizing plate of a pressure-sensitive adhesion type). As a particularly preferred embodiment, a pressure-sensitive adhesive layer for bonding of other members such as another optical film and a liquid crystal cell can be provided to an opposite side of the polarizer of the above-mentioned polarizer protective film.

The pressure-sensitive adhesive forming the above-mentioned pressure-sensitive adhesive layer is not particularly limited. However, for example, a pressure-sensitive adhesive containing as a base polymer an acrylic polymer, a silicone-based polymer, polyester, polyurethane, polyamide, polyether, a fluorine or rubber-based polymer can be appropriately selected to be used. In particular, a pressure-sensitive adhesive such as an acrylic pressure-sensitive adhesive is preferably used, which is excellent in optical transparency, exhibits appropriate wettability and pressure-sensitive adhesion properties of a cohesive property and an adhesive property, and is excellent in weather resistance and heat resistance. In particular, an acrylic pressure-sensitive adhesive made of an acrylic polymer containing 4 to 12 carbon atoms is preferred.

In addition to the above, in terms of the prevention of a foaming phenomenon and a peeling phenomenon caused by moisture absorption, the prevention of a degradation in optical properties and bending of a liquid crystal cell caused by thermal expansion difference or the like, and the formation property of a liquid crystal display apparatus which is of high quality and has excellent durability, a pressure-sensitive adhesive layer having a low moisture absorbing ratio and excellent heat resistance is preferred.

The above-mentioned pressure-sensitive adhesive layer may contain, for example, resins of a natural substance or a synthetic substance, in particular, additives to be added to the pressure-sensitive adhesive layer, a tackifying resin, a filler such as glass fibers, glass beads, metal powder, or other inorganic powders, a pigment, a colorant, and an antioxidant.

A pressure-sensitive adhesive layer that contains fine particles and exhibits a light diffusion property or the like may be used.

The above-mentioned pressure-sensitive adhesive layer can be provided by any appropriate method. Examples thereof include a method of preparing a pressure-sensitive adhesive solution in an amount of about 10 to 40% by weight in which a base polymer or a composition thereof is dissolved or dispersed in any appropriate single solvent such as toluene or ethyl acetate or a solvent made of a mixture, and directly applying the pressure-sensitive adhesive solution onto a polarizing plate or an optical film by any appropriate development method such as a flow casting method or a coating method, or forming a pressure-sensitive adhesive layer on a separator according to the above, and moving the pressure-sensitive adhesive layer to the polarizer protective film surface.

Thepressure-sensitive adhesive layer may also be provided on one surface or both surfaces of a polarizing plate as superimposed layers of different compositions, different kinds, or the like. In the case of providing the pressure-sensitive adhesive layer on both surfaces of the polarizing plate, pressure-sensitive adhesive layers on front and reverse surfaces of the polarizing plate can have different compositions, kinds, thicknesses, and the like.

The thickness of the pressure-sensitive adhesive layer can be determined appropriately in accordance with the use purpose and the adhesive strength, and preferably 1 to 40 µm, more preferably 5 to 30 µm, andparticularlypreferably 10 to 25 µm. When the thickness of the pressure-sensitive adhesive layer is smaller than 1 µm, durability of the layer degrades. When the thickness of the pressure-sensitive adhesive layer is larger than 40 µm, lifting and peeling are likely to occur due to foaming or the like, resulting in an unsatisfactory outer appearance.

In order to enhance the contactness between the above-mentioned polarizer protective film and the above-mentioned pressure-sensitive adhesive layer,ananchor layer canal so be provided therebetween.

As the anchor layer, preferably, an anchor layer selected from polyurethane, polyester, and polymers containing amino groups in molecules is used, and in particular, polymers containing amino groups in molecules are preferably used. In the polymer containing an amino group in molecules, an amino group in the molecules reacts with a carboxyl group in the pressure-sensitive adhesive or a polar group in a conductive polymer, or exhibits an interaction such as an ion interaction, so satisfactory contactness is ensured.

Examples of the polymers containing amino groups in molecules include polyethyleneimine, polyallylamine, polyvinylamine, polyvinylpyridine, polyvinylpyrrolidine, and a polymer of an amino group-containing monomer such as dimethylaminoethyl acrylate shown in the above-mentioned copolymerized monomer of the acrylic pressure-sensitive adhesive.

In order to provide the above-mentioned anchor layer with an antistatic property, an antistatic agent can also be added. Examples of the antistatic agent for providing an antistatic property include an ionic surfactant, a conductive polymer such as polyaniline, polythiophene, polypyrrole, and polyquinoxaline, and a metal oxide such as tin oxide, antimony oxide, and indium oxide. Particularly, in view of optical properties, an outer appearance, an antistatic effect, and stability of an antistatic effect under heat or humidity, the conductive polymers are used preferably. Of those,a water-soluble conductive polymer such as polyaniline and polythiophene, or a water-dispersion conductive polymer is particularly preferably used. The reason for this is as follows: in the case of using a water-soluble conductive polymer or a water-dispersion conductive polymer as a material for forming an antistatic layer, the deterioration of an optical film base caused by an organic solvent can be suppressed in the process of coating.

In the present invention, each layer of a polarizer and a polarizer protective film forming the above-mentioned polarizing plate, and the pressure-sensitive adhesive layer may be provided with a UV absorbing ability, for example, by the treatment with a UV absorbing agent such as a salicylateester-based compound, a benzophenol-based compound, benzotriazol-based compound, a cyanoacrylate-based compound, and a nickel complex salt-based compound.

The polarizing plate of the present invention may be provided on either one of a viewer side and a backlight side of a liquid crystal cell or on both sides thereof without particular limitation.

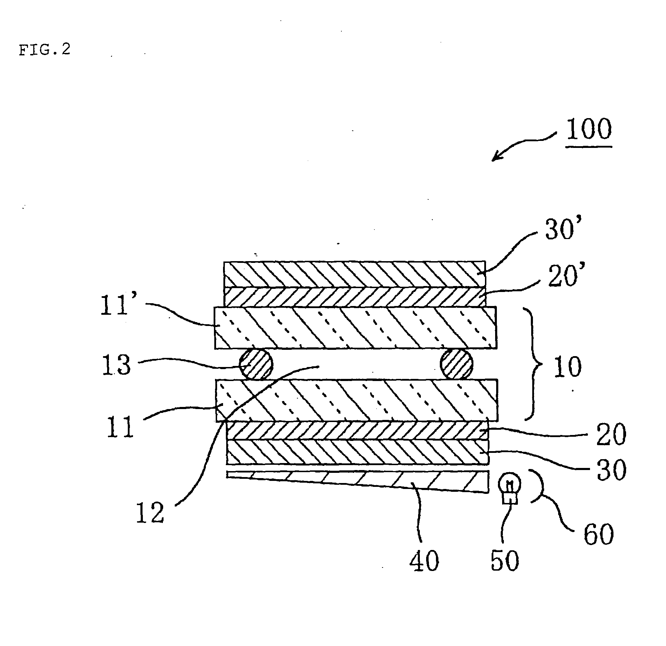

Next, an image display apparatus of the present invention willbedescribed. The image display apparatus of the present invention includes at least one polarizing plate of the present invention. Herein, as one example, a liquid crystal display apparatus will bedescribed. However, it is needless to say that the present invention is applicable to any display apparatus requiring a polarizing plate. Specific examples of the image display apparatus to which the polarizing plate of the present invention is applicable include a self-emitting display apparatus such as an electroluminescence (EL) display, a plasma display (PD), and a field emission display (FED). FIG. 2 is a schematic cross-sectional view of a liquid crystal display apparatus according to a preferred embodiment of the present invention. In the illustrated example, atransmission-type liquid crystal display apparatus will be described. However, it is needless to say that the present invention is also applicable to a reflection-type liquid crystal display apparatus or the like.

A liquid crystal display apparatus 100 includes a liquid crystal cell 10, retardation films 20 and20' placed so as to interpose the liquid crystal cell 10 therebetween, polarizing plates 30 and **30'** placed on outer sides of the retardation films **20** and **20',** a light guide plate 40, a light source 50, and a reflector 60. The polarizing plates 30 and 30' are placed so that polarization axes thereof are perpendicular to each other. The liquid crystal cell 10 includes a pair of glass substrates 11 and 11' and a liquid crystal layer 12 as a display medium placed between the substrates. One glass substrate 11 is provided with a switching element (typically, TFT) for controlling the electrooptical properties of liquid crystals, a scanning line for providing a gate signal to the switching element, and a signal line for providing a source signal to the switching element (all of them are not shown) . The other glass substrate 11' is provided with a color layer forming a color filter and a shielding layer (black matrix layer) (both of them are not shown). A distance (cell gap) between the glass substrates 11 and 11' is controlled by a spacer 13. In the liquid crystal display apparatus of the present invention, the polarizing plate of the present invention described above is employed as at least one of the polarizing plates 30 and 30'.

For example, in the case of the liquid crystal display apparatus 100 employing a TN mode, liquid crystal molecules of the liquid crystal layer 12 are aligned in a state with respective polarization axes being shifted by 90° during application of no voltage. In such a state, injected light including light in one direction transmitted through the polarizing plate is twisted 90° by the liquid crystal molecules. As described above, the polarizing plates are arranged such that the respective polarization axes are perpendiculartoeachother, and thus light (polarizedlight) reaching the other polarizing plate transmits through the polarizing plate. Thus, during application of no voltage, the liquid crystal display apparatus 100 provides a white display (normally white mode). Meanwhile, in the case where a voltage is applied onto the liquid crystal display apparatus 100, alignment of the liquid crystal molecules in the liquid crystal layer 12 changes. As a result, the light (polarized light) reaching the other polarizing plate cannot transmit through the polarizing plate, and a black display is provided. Displays are switched as described above by pixel by using the active element, to thereby form an image.

Hereinafter, the present invention will be described specifically with reference to Examples, but the present invention is not limited to the examples. Unless otherwise noted, parts and % in the Examples refer to parts by weight.

### <Mass average molecular weight>

The mass average molecular weight was measured by polystyrene conversion, using Shodex GPC system-21H manufactured by Showa Denko K.K.

### <Tg (glass transition temperature, whichmaybe referred to as TG>

A polymer was once dissolved intetrahydrofuran, and the resultant solution was placed in excessive hexane or toluene, followed by reprecipitation and filtration. The precipitant thus obtained was subjected to vacuum drying (1 mmHg (1.33 hPa), 3 or more hours), to thereby remove a volatile constituent. The obtained resin was measured for a Tg, using a DSC apparatus (DSC 8230 manufactured by Rigaku Co., Ltd.).

### <Dealcoholization reaction rate (lactone cyclization rate)>

The dealcoholization reaction rate was obtained from the weight reduction caused by a dealcoholization reaction from 150°C, which is prior to the starting of the weight reduction, to 300°C, which is prior to the starting of the decomposition of a polymer, by dynamic TG measurement, based on the weight reduction amount occurring at a time when all the hydroxyl groups are dealcoholized as methanol from a polymer composition obtained in polymerization.
More specifically, the weight reduction rate from 150°C to 300°C by the dynamic TG measurement of a polymer having a lactone ring system is measured, and the obtained measured weight reduction rate is defined as (X). On the other hand, the theoretical weight reduction rate (i.e., the weight reduction rate calculated assuming that 100% dealcoholization occurred on the composition) assuming that all the hydroxyl groups contained in the polymer composition participate in the formation of a lactone ring as alcohol, resulting in dealcoholization, from the polymer composition, is defined as (Y). More specifically, the theoretical weight reduction rate (Y) can be calculated from a molar ratio of a material monomer having a structure (hydroxyl group) participating in a dealcoholization reaction in a polymer, that is, the content of the material monomer in the polymer composition. Those values (X, Y) are substituted into a dealcoholization calculation expression: 1- (measured weight reduction rate (X)/theoretical weight reduction rate (Y)), and the obtained value is expressed by %, to thereby obtain a dealcoholization reaction rate (lactone cyclization rate).

### <Melt flow rate>

The melt flow rate was measured at a test temperature of 240°C and a load of 10 kg based on JIS-K6874.

### <Measurement of retardation>

The refractive indices nx, ny, and nz of a sample film were measured with an automatic birefringence measurement apparatus (Automatic birefringence meter KOBRA21-ADH manufactured by Oji Scientific Instruments Co. , Ltd.), and an in-plane retardation And and a thickness direction retardation Rth were measured. The measurement temperature was 23°C, and the measurement wavelength was 590 nm.

### <Measurement of a tear strength>

A sample (width 5 cm x length 15 cm) was measured for a tear strength at a tensile speed of 200 mm/min (room temperature), using Autograph AG-1 (trade name) manufactured by Shimazu Corporation).

### <Measurement of a refractive index>

The refractive index was measured with an Abbe refractometer (Abbe refractometer 2-T manufactured by ATAGO Co., Ltd.).

### <Adhesive property between a polarizer protective film and a polarizer>

The state in which a polarizing plate (100 mm x 100 mm) was twisted with the hand was evaluated based on the following standards.
o:The polarizer and the polarizer protective film are integrated with each other and do not peel from each other.
Δ: Peeling is recognized at an end of the polarizer and the polarizer protective film.
x: Peeling is recognized between the polarizer and the polarizer protective film.

### <Outer appearance of a polarizing plate>

The outer appearance of the obtained polarizing plate was evaluated. The evaluation was conducted with respect to a polarizing plate of 50 mm x 50 mm by visual inspection based on the following standards.
o: There are no lifting, streaks, and the like.
×: Lifting and streaks are not found.
The lifting refers to the state in which the polarizer and the polarizer protective film do not tightly contact each other, and the streak means that the polarizer protective film or the polarizer is bonded by itself even if in a small area.

### EXAMPLE 1

### (Polarizer)

A polyvinyl alcohol film with a thickness of 80 µm was dyed in a 5% by weight of an iodine aqueous solution (weight ratio: iodine/potassium iodide = 1/10). Then, the resultant polyvinyl alcohol film was soaked in an aqueous solution containing 3% by weight of boric acid and 2% by weight of potassium iodide. Further, the polyvinyl alcohol film was stretched by 5.5 times in an aqueous solution containing 4% by weight of boric acid and 3% by weight of potassium iodide, and thereafter, the polyvinyl alcohol film was soaked in a 5% by weight of a potassium iodide aqueous solution. After that, the polyvinyl alcohol film was dried in an oven at 40°C for 3 minutes to obtain a polarizer with a thickness of 30 µm.

### (Production of a lactone ring-containing acrylic resin)

In a 30-L reaction vessel equipped with a stirring device, a temperature sensor, a cooling tube, and a nitrogen introduction tube, 8,000 g of methyl methacrylate (MMA), 2,000 g of methyl 2- (hydroxymethyl) acrylate (MHMA), and 10,000g of toluene were placed, and the mixture was heated to 105 ° C while nitrogen was being introduced thereto. After reflux, while 10.0 g of tert-amylperoxy isononanoate (Lupasol 570 (Trade name) manufactured by Atofina Yoshitomi Ltd.) was added as an initiator, and at the same time, a solution containing 20.0 g of an initiator and 100 g of toluene were dropped over 4 hours, the mixture was subjected to solution polymerization under reflux (about 105 to 110°C), and further aged over 4 hours.
To the resultant polymer solution, 10 g of a stearyl phosphoate/distearyl phosphoate mixture (Phoslex A-18 (Trade name) manufactured by Sakai Chemical Industry Co., Ltd.) was added, and the polymer solution was subj ected to cyclization condensation under reflux (about 90 to 110°C) for 5 hours. Then, the polymer solution obtained in the above cyclization condensation was introduced to a bent-type twin-screw extruder (φ = 29.75 mm, L/D = 30) of a barrel temperature of 260°C, a rotation number of 100 rpm, a decompression degree of 13.3 to 400 hPa (10 to 300 mmHg), one rear bent, and four fore bents, at a processing speed of 2.0 kg/time in resin amount conversion. The polymer solution was subjected to cyclization condensation reaction and devolatilization in the extruder and extruded, to thereby obtain a transparent lactone ring-containing acrylic resin pellet (1A).
The lactone cyclization ratio of the lactone ring-containing acrylic resin pellet (1A) was 97.0%, the mass average molecular weight thereof was 147,700, the melt flow rate thereof was 11.0 g/10 minutes, and the Tg (glass transition temperature) thereof was 130°C.

### (Production of a polarizer protective film)

1 part of TINUVIN 1577 (manufacturedby Ciba Specialty Chemicals Inc.), 1 part of "Adekastab LA-31" (manufacturedbyADEKACorporation), 10 parts of an acrylonitrile-styrene copolymer, and 0.12 parts of zinc acetate as a foaming suppressor were mixed with respect to 100 parts of the lactone ring-containing acrylic resin pellet (1A), and the mixture was extruded from a T-die at a die temperature of 250°C with a uniaxial extruder to obtain a polarizer protective film (before stretching) of 120 µm. This film was stretched by 1.5 times at 145°C in a longitudinal direction, and then stretched by 1. 8 times at 145°Cinalateral direction, to thereby obtain a polarizer protective film (after stretching) with a thickness of 60 µm. After that, one surface of the film was subjected to corona treatment at a discharge amount of 133 w·min/m².

### (Easily adhesion layer)

A solution prepared by adding 66.7 parts of isopropyl alcohol with respect to 100 parts of a silane coupling agent APZ-6601 (manufactured by Toray Dow Corning Silicone Co. , Ltd.) was applied onto a corona treated surface of the film obtained in the above with a wirebar #5 and a volatile content was evaporated. The thickness of an anchor layer after evaporation is 100 nm.

### (Adhesive)

An aqueous solution of a polyvinyl alcohol-based adhesive with a concentration of 0.5% by weight was prepared from an aqueous solution containing 20 parts by weight of methylol melamine with respect to 100 parts by weight of a polyvinyl alcohol resin modified with an acetoacetyl group (acetylation degree: 13%).

### (Production of a polarizing plate)

The above-mentioned polarizer protective film was attached to both surfaces of a polarizer using a polyvinyl alcohol-based adhesive so that the easily adhesion layer side of the polarizer protective film came into contact with the polarizer. The polyvinyl alcohol-based adhesive was applied onto acrylic resin surface sides, respectively, followed by drying at 70°C for 10 minutes, to obtain a polarizing plate.

### (Pressure-sensitive adhesive)

As a base polymer, a solution (solid content: 30%) containing an acrylic polymer with a weight average molecular weight of 2,000, 000 made of a copolymer of butyl acrylate:acrylic acid:2-hydroxyethyl acrylate = 100:5:0.1 (weight ratio) was used. To the acrylic polymer solution, 4 parts of COLONATE L manufactured by Nippon Polyurethane Co., Ltd., which was an isocyanate-based polyfunctional compound, 0.5 parts of an additive (KBM 403 manufactured by Shin-Etsu Chemical Co., Ltd.), and a solvent (ethyl acetate) for adjusting the viscosity were added with respect to 100 parts of a polymer solid content, to thereby prepare the pressure-sensitive adhesive solution (solid content:12%). The pressure-sensitive adhesive solution was applied onto a releasing film (polyethylene terephthalate base: Dia Foil MRF38 manufactured by Mitsubishi Chemical Polyester Film Co., Ltd.), followed by drying in a hot-air circulation type oven, to thereby form a pressure-sensitive layer with a thickness of 25 µm.

### (Polarizing plate anchor layer)

A polyethyleneimine adduct of polyacrylicester (Polyment NK380 manufactured by Nippon Shokubai Co., Ltd.) was diluted 50-fold with methylisobutylketone. The resultant polyethyleneimine adduct was applied onto a nylon resin side of the polarizing plate using a wire bar (#5) so that the thickness after drying was 50 nm, followed by drying.

### (Production of a pressure-sensitive adhesive type polarizing plate)

A releasing film with the above-mentioned pressure-sensitive adhesive layer formed thereon was attached to the polarizing plate anchor layer, to thereby produce a pressure-sensitive adhesive type polarizing plate.

### (Evaluation of a polarizer protective film)

The obtained polarizer protective film (each before and after stretching) was measured for a tear strength, an in-plane retardation Δnd, a thickness direction retardation Rth, and a refractive index. Table 1 shows the results.

### (Evaluation of a polarizing plate)

The adhesive property of the polarizer protective film and the polarizer of the obtained polarizing plate,and the outer appearance thereof were evaluated, revealing that the adhesive property of the polarizer protective film and the polarizer was o (the polarizer and the polarizer protective film are integrated with each other and do not peel from each other), and the outer appearance was o (there are no lifting, streaks, and the like).

### [Comparative Example 1]

Apolarizerprotectivefilm (after stretching) withathickness of 55 µm was obtained in the same manner as in Example 1, except that in the production of the polarizer protective film (after stretching) of Example 1, a TAC film (triacetyl cellulose film) (TD-TAC (Trade Mark) manufactured by Fuji Photo Film Co., Ltd.) was stretched by 1.2 times in a longitudinal direction at 150°C, and then, stretched by 1.3 times in a lateral direction at 150°C.
Table 1 shows the evaluation results of the obtained polarizer protective film.

### [Comparative Example 2]

Apolarizerprotectivefilm (afterstretching) withathickness of 70 µm was obtained in the same manner as in Example 1, except that in the production of the polarizer protective film (after stretching) of Example 1, a norbornene-based film (ZEONOR (Trade Mark) manufactured by ZEON CORPORATION) was stretched by 1.2 times in a longitudinal direction at 140°C, and then, stretched by 1.3 times in a lateral direction at 140°C.
Table 1 shows the evaluation results of the obtained polarizer protective film.

[Table 1]

**Table 1**

| | Stretching temperature (°C) | Stretching magnification (times) | | Tear strength (N/mm) | | In-plane retardation (nm) | | Thickness direction retardation (nm) | | Refractive index | |
|---|---|---|---|---|---|---|---|---|---|---|---|
| | | Vertical | Horizontal | Before stretching | After stretching | Before stretching | After stretching | Before stretching | After stretching | Before stretching | After stretching |
| Example 1 | 145 | 1.5 | 1.8 | 0.4 | 2.5 | 1 | 1 | 3 | 3 | 1.5 | 1.5 |
| Comparative Example 1 | 150 | 1.2 | 1.3 | 0.9 | 1.5 | 5.5 | 4 | 55 | 85 | 1.49 | 1.49 |
| Comparative Example 2 | 140 | 1.2 | 1.3 | 1.3 | 1.8 | 0.2 | 25 | 5 | 160 | 1.53 | 1.53 |

### Industrial Applicability

The polarizer protective film and the polarizing plate of the present invention can be preferably used for various kinds of image display apparatuses (liquid crystal display apparatus, organic EL display apparatus, PDP, etc.).

## Claims

1. A polarizer protective film, comprising as a main component a (meth) acrylic resin, which is stretched by longitudinal stretching and/or lateral stretching.

2. A polarizer protective film according to claim 1, wherein the (meth)acrylic resin has a lactone ring system.

3. Apolarizerprotective film according to claim 1 or 2, wherein the stretching is sequential stretching or simultaneous biaxial stretching at a longitudinal stretching magnification of 1.1 to 3.0 times and a lateral stretching magnification of 1.1 to 3.0 times.

4. A polarizer protective film according to any one of claims 1 to 3, wherein an in-plane retardation And is 3.0 nm or less, a thickness direction retardation Rth is 10.0 nm or less, and a tear strength is 2.0 N/mm or more.

5. A polarizing plate,comprising a polarizer formed of a polyvinyl alcohol-based resin and a polarizer protective film according to any one of claims 1 to 4, wherein the polarizer is bonded to the polarizer protective film via an adhesive layer.

6. A polarizing plate according to claim 5, wherein the adhesive layer is formed of a polyvinyl alcohol-based adhesive.

7. A polarizing plate according to claim 5 or 6, further comprising a pressure-sensitive adhesive layer as at least one of an outermost layer.

8. An image displayapparatus comprisingat least onepolarizing plate according to any one of claims 5 to 7.
